# EUROPEAN PATENT APPLICATION

(11) **EP 1 632 158 A1**
(43) Date of publication of application: **08.03.2006**
(21) Application number: 04425664.2
(22) Date of filing: 02.09.2004
(51) Int. Cl.: A47J 31/40, A47J 31/46, A47J 31/54, F15B 15/14

(54) **Improved electric coffee making machine**

(71) Applicant: Home Bar Technologies S.r.l., 47824 Poggio Berni (RN) (IT)
(72) Inventor: Chebli, Charles, Chomedey Laval, QC H7T 2M5 (CA)
(74) Representative: Provvisionato, Paolo

(57) **Abstract**

An improved electric coffee making machine comprises an outer casing (10), a pod holder unit (1), an exchanger unit (2) and a piston unit (3). The pod holder unit (1) comprises an outer pod holder (11), hinged to the outer casing (10), and a removable funnel (12) made as a separate body; the exchanger unit (2) comprises a plate (21), made as a single body, having a guide (22), for aligning the exchanger unit (2) with the pod holder unit (1) and the piston unit (3), and means (23) for connecting the exchanger unit (2) to the piston unit (3); the piston unit (3) comprises a cylinder (31) housing a piston (32) and a lid (33) drilled for the passage of one end (32a) of the piston (32), having bayonet connecting means (34) designed to connect them in a removable fashion.

## Description

The present invention relates to an improved electric coffee making machine.

In recent decades these machines have spread especially in private and public offices and in all places such as hospitals, stations and airports where there are intense flows of people who, because they are in a hurry or for other reasons, may prefer a quick drink rather than stopping at a bar or another fixed refreshment point.

One of the main reasons for the increase in the number of electric coffee making machines and machines for the preparation of other hot drinks is certainly that they are an excellent compromise between providing users with a convenient service involving a product of acceptable quality and minimising the time required to use said service.

This situation is evident especially in the case of offices, many of which have machines of this type to limit the number of times employees go out of the workplace, but without depriving them of a break during the working day.

In parallel with the spread of the machines, research was carried out on the improvement of construction details, mainly intended to guarantee a good quality product and to meet the sanitary standards in force, as well as to obtain improved results relative to the assembly and maintenance of such apparatuses.

The operation of these machines may be outlined as follows: in a time approximately variable between around 30 and around 100 seconds, depending on the type of coffee (strong, weak or American-style), the water is taken from a tank, heated electrically and conveyed onto the coffee (which is often marketed for these purposes pre-assembled in a pod), then passes through a filter and is channelled into an outlet pipe under which there is the space for the small cup or glass.

For a number of reasons, that is to say, to reload the machine with pods, to make the process efficient, to avoid keeping the apparatus constantly under stress, to guarantee the necessary conditions of cleanliness and hygiene, when the machine switches from the resting condition to the operating condition, started by the user with a push-button control panel located on the front of device casing, several structural parts must be compressed, which is the equivalent of what happens in normal manual coffee making machines when the coffee is compressed in the filter and the two parts of the coffee maker are screwed together to prevent water and heat from escaping.

Therefore, the crucial zone of the machine is the so-called coffee unit: comprising three separate segments consisting of a pod holder unit, an exchanger unit and a piston unit. These parts of the machine are made separately then assembled so that they can automatically switch from the resting condition to the operating condition and vice versa.

The pod holder unit comprises a support, which can rotate thanks to the deformation of a torsion spring, on which a funnel is made integral with it. The funnel in turn supports the filter on which the coffee pod is placed. This is the final section of the path covered by the water which, after impregnating the pod, runs through the filter in the funnel and from there drops into the small cup or glass below.

The fact that the pod holder unit consists of a single part, of which in particular the funnel is an integral part, means that it is not possible to clean the parts in contact with the water already infused with coffee, unless the entire part is disassembled, involving considerable assembly times and complications.

Indeed, the moderate rotation allowed by the spring only allows, and with a little difficulty, substitution of the coffee pod and, if necessary, filter removal and fitting.

In addition to sanitary issues, this also results in more rapid wear on the surfaces in contact with the hot coffee, leading to a more frequent need to substitute the entire block. Moreover, the materials used do not always have the necessary approval, or consist of a mixture of materials that were approved separately, but not as the material produced by mixing them.

Above the pod holder unit is the exchanger unit, in which the water is heated. The top of this unit has a metal plate with two side tabs which, during assembly, must be inserted in two separate plastic guides, suitably drilled to allow the passage of two pins which must guarantee perfect alignment of the three structural segments. Metal plate fixing to the exchanger is affected by high temperatures and so wear causes deformations which alter the perfect alignment of the three segments.

The piston unit is above the exchanger unit, and comprises a piston housed in a containment cylinder, from which one end of the piston projects so as to engage in a matching seat made in the upper surface of the exchanger and the metal plate. The cylinder has tabs which are drilled to allow alignment with the other segments.

Therefore, during assembly the piston unit and exchanger unit must be kept aligned while a screw is forced into a through-hole in the exchanger until it goes into a corresponding dead hole made at the end of the piston projecting from the cylinder, which occupies the above-mentioned matching seat. The operation is extremely complicated and use rapidly results in wear of the end of the piston into which the screw is forced.

The aim of the present invention is, therefore, to overcome the above-mentioned disadvantages. This is achieved by modifying the process for the production of some components.

The main advantage of the present invention is basically that it greatly simplifies assembly of the entire apparatus, allowing effortless alignment of the three above-mentioned structural segments, the alignment not being altered even during machine use.

Moreover, the new design of some structural parts allows greater hygiene and cleanliness, which allows a reduction in wear on said parts and, therefore, extends their life.

Finally, even if the parts most subject to wear, directly in contact with the water already infused with coffee, have to be substituted, they have been made separately and the relative assembly and disassembly is simpler and faster, allowing considerable savings, both economic and in terms of maintenance time.

Other characteristics and advantages of the present invention are more clearly illustrated in the detailed description which follows, with reference to the accompanying drawings, which illustrate a preferred embodiment without limiting the scope of the inventive concept, and in which:

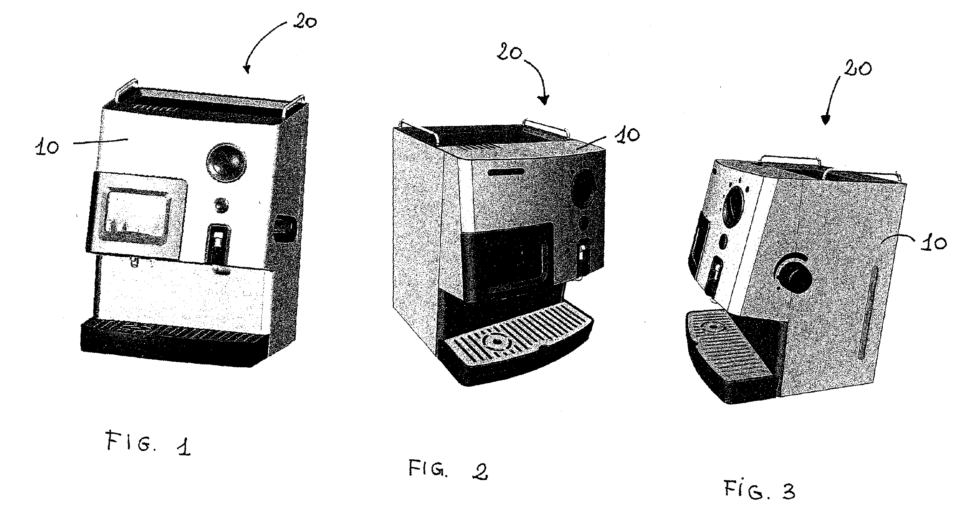

- Figures 1, 2 and 3 are respectively a front, three-quarter and side perspective assembly view of the invention;
- Figure 4 is a side view of the invention with some parts cut away to better illustrate others;
- Figure 5 is an illustration of the innovative parts of the invention;
- Figure 6 is an exploded view of the parts of the invention illustrated in Figure 5;
- Figures 7, 8 and 9 are exploded views of details of the parts illustrated in Figures 5 and 6.

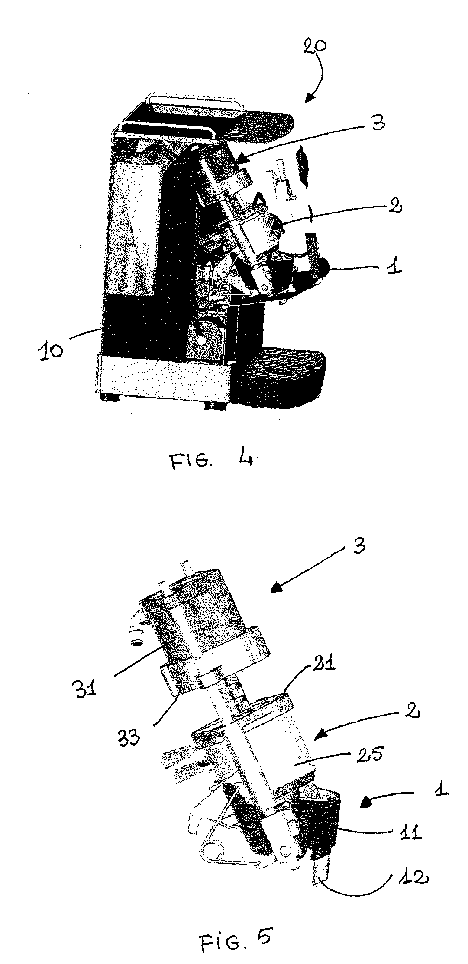

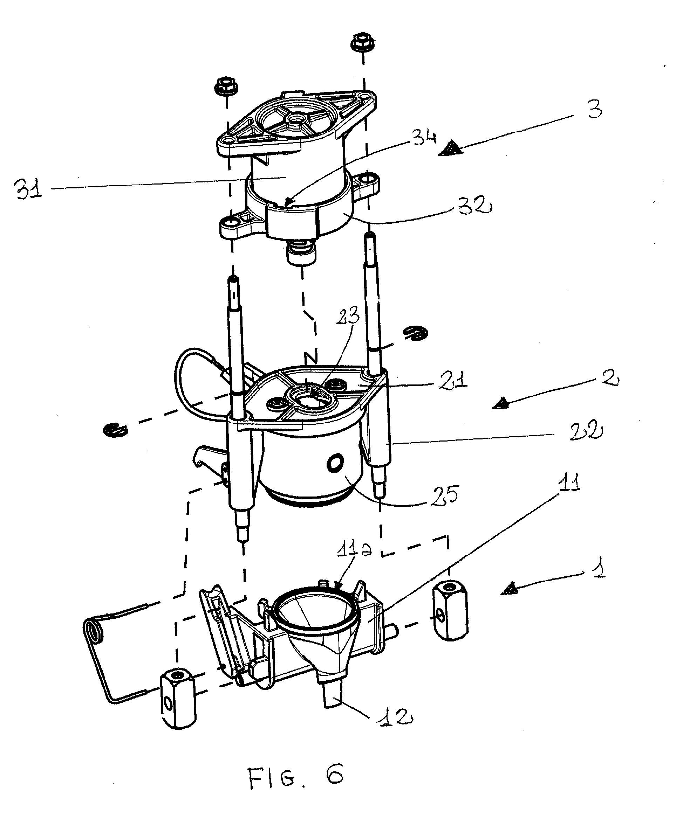

As can be seen in the accompanying drawings, the invention consists of an improved electric coffee making machine, comprising an outer casing (10), a pod holder unit (1), an exchanger unit (2) and a piston unit (3). Although the machine (20) obviously also comprises a water tank and the mechanical and electronic components for starting, controlling and interrupting the water cycle, attention is only focused on the above-mentioned three structural segments, represented outside the machine in their assembled version and in an exploded view in Figures 5 and 6, since the innovative features of this device are in these three segments.

In particular, the pod holder unit (1) comprises an outer pod holder (11), hinged to the outer casing (10), and a removable funnel (12) made as a separate body, to facilitate its cleaning and substitution.

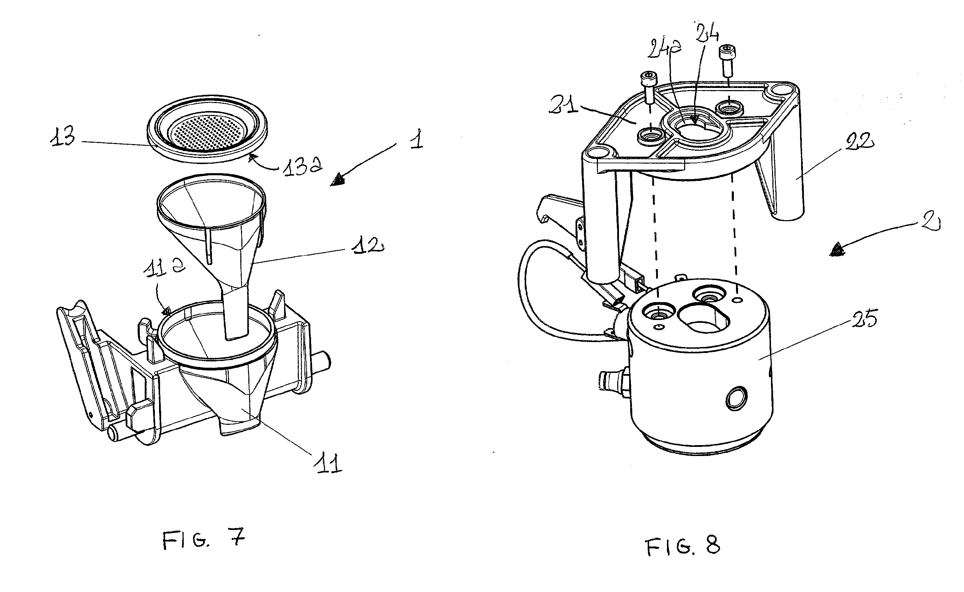

As illustrated in Figure 7, which is an exploded view of the pod holder unit (1), it also comprises a filter (13), designed to support a coffee pod, having snap on connecting means (13a), matching a portion (11a) of the surface of the outer pod holder (11), the connecting means designed to hold the removable funnel (12) in position for use.

During maintenance, it will be sufficient to disengage the filter (13) and lift it out of the outer pod holder (11) then remove the funnel (12) and carry out the necessary cleaning and, if required, substitution of the funnel (12). The funnel (12) is made of a material, consisting of a mixture of different components, approved as food-safe by the Food and Drug Administration.

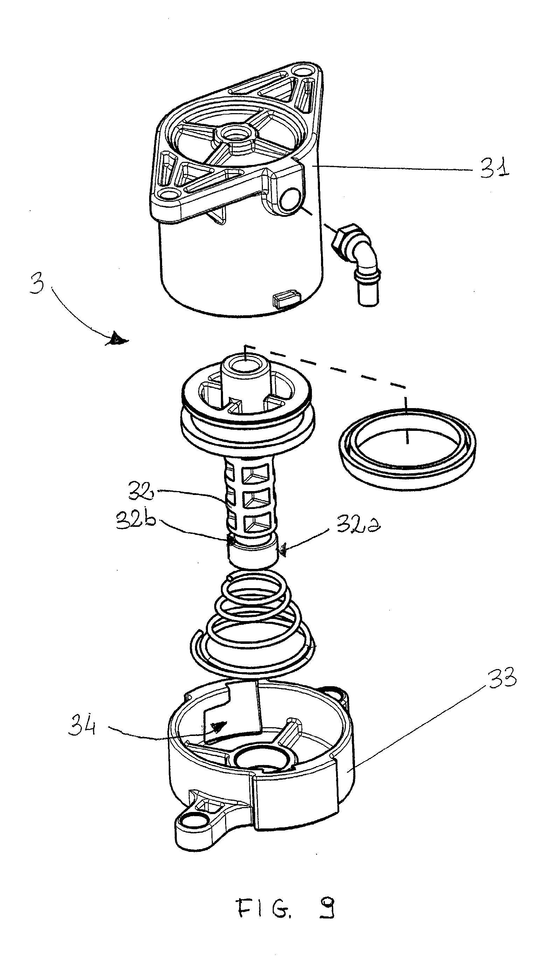

The exchanger unit (2), illustrated in an exploded view in Figure 8, comprises a conventional exchanger (25), on top of which a plate (21) is fixed, made as a single body, having a guide (22), to align the exchanger unit (2) with the pod holder unit (1) and the piston unit (3), and means (23) which connect it to the piston unit (3). For simple construction, the plate (21) should be made of a plastic material which can be moulded. The means (23) which connect the exchanger unit to the piston unit (3) comprise a seat (24), matching one end (32a) of a piston (32) projecting from the piston unit (3). The end (32a) of the piston (32) comprises a recess (32b), designed to engage a collar (24a) of the seat (24) after sliding horizontally, so as to prevent relative vertical movements between the exchanger unit (2) and the piston unit (3).

Finally, the piston unit (3), visible in the exploded view in Figure 9, comprises a cylinder (31) housing the piston (32) and a lid (33) drilled to allow the passage of the end (32a) of the piston (32), where the cylinder (31) and the lid (33) comprise bayonet connecting means (34), designed to connect them in a removable fashion.

The invention described may be subject to modifications and variations without thereby departing from the scope of the inventive concept. Moreover, all details of the invention may be substituted by technically equivalent elements.

Obviously, in practice modifications and/or improvements are possible without departing from the scope of the claims herein.

## Claims

1. An improved electric coffee making machine, comprising an outer casing (10), a pod holder unit (1), an exchanger unit (2) and a piston unit (3), **characterised in that** the pod holder unit (1) comprises an outer pod holder (11), hinged to the outer casing (10), and a removable funnel (12) made as a separate body, thus facilitating its cleaning and substitution.

2. The machine according to claim 1, **characterised in that** it comprises a filter (13), designed to support a coffee pod, having snap on connecting means (13a), said connecting means (13a) matching a portion (11a) of the surface of the outer pod holder (11) and being able to fix the removable funnel (12) in position for use.

3. The machine according to claim 1, **characterised in that** the funnel (12) is made of a material consisting of a mixture of different components, said material being approved as food-safe.

4. An improved electric coffee making machine, comprising an outer casing (10), a pod holder unit (1), an exchanger unit (2) and a piston unit (3), **characterised in that** the exchanger unit (2) comprises a plate (21), made as a single body, having a guide (22), for aligning the exchanger unit (2) with the pod holder unit (1) and the piston unit (3), and means (23) for connecting the exchanger unit (2) to the piston unit (3).

5. The machine according to claim 4, **characterised in that** the plate (21) is made of a plastic material that can be moulded.

6. The machine according to claim 4, **characterised in that** the means (23) for connecting the exchanger unit (2) to the piston unit (3) comprise a seat (24), matching one end (32a) of a piston (32) projecting from the piston unit (3).

7. The machine according to claim 6, **characterised in that** the end (32a) of the piston (32) comprises a recess (32b), designed to engage a collar (24a) of the seat (24) after sliding horizontally, to prevent relative vertical movements between the exchanger unit (2) and the piston unit (3).

8. An improved electric coffee making machine, comprising an outer casing (10), a pod holder unit (1), an exchanger unit (2) and a piston unit (3), wherein the piston unit (3) comprises a cylinder (31) housing a piston (32) and a lid (33) drilled for the passage of one end (32a) of the piston (32), the improved electric coffee making machine being **characterised in that** the cylinder (31) and the lid (33) comprise bayonet connecting means (34) designed to connect them in a removable fashion.
